(19) Europäisches Patentamt
European Patent Office
Office européen des brevets

(11) **EP 4 393 755 B1**

(12) **EUROPEAN PATENT SPECIFICATION**

(45) Date of publication and mention
of the grant of the patent:
**10.12.2025 Bulletin 2025/50**

(21) Application number: **23218910.0**

(22) Date of filing: **20.12.2023**

(51) International Patent Classification (IPC):
**B60L 15/20** *(2006.01)*

(52) Cooperative Patent Classification (CPC):
**B60L 15/209; B60L 15/20;** B60L 2260/16

(54) **BOOST SYSTEM FOR AN ELECTRIC VEHICLE, ELECTRIC VEHICLE HAVING SAME, AND METHOD FOR BOOSTING A SPEED OF AN ELECTRIC VEHICLE**

BOOSTSYSTEM FÜR EIN ELEKTROFAHRZEUG, ELEKTROFAHRZEUG DAMIT UND VERFAHREN ZUM VERSTÄRKEN EINER GESCHWINDIGKEIT EINES ELEKTROFAHRZEUGS

SYSTÈME DE SURALIMENTATION POUR UN VÉHICULE ÉLECTRIQUE, VÉHICULE ÉLECTRIQUE LE COMPRENANT ET PROCÉDÉ DE SURALIMENTATION D'UNE VITESSE D'UN VÉHICULE ÉLECTRIQUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **21.12.2022 US 202263434302 P**

(43) Date of publication of application:
**03.07.2024 Bulletin 2024/27**

(73) Proprietor: **BRP-Rotax GmbH & Co. KG
4623 Gunskirchen (AT)**

(72) Inventor: **FREUDENTHALER, Martin
4651 Stadl-Paura (AT)**

(74) Representative: **Murgitroyd & Company
165-169 Scotland Street
Glasgow G5 8PL (GB)**

(56) References cited:
CN-A- 114 572 012          DE-A1- 102010 010 443
DE-A1- 102013 214 169          GB-A- 2 510 939
GB-A- 2 513 612

**Description**

CROSS-REFERENCE

The present application claims priority to United States Provisional Patent Application No. 63/434,302, filed December 21, 2022, the entirety of which is incorporated herein by reference.

TECHNICAL FIELD

The present technology relates generally to boost systems for electric vehicles, to electric vehicles having such systems, and to methods for boosting a speed of electric vehicles.

BACKGROUND

Electric karts are motor vehicles that are used for leisure and sporting activities. In electric kart racing, be it professional or recreational, karts may have a boost mode (also referred to as a "boost function"), in which output power is temporarily increased, improving acceleration and adding excitement for drivers and audiences alike. Typically, such a boost mode provides a pre-defined increase of power, resulting in better acceleration for a predetermined limited period of time. The number of available boosts per race may be limited and additional boosts may be awarded for specific actions, such as passing over a defined track zone. To activate a boost, the driver may press a button, in response to which boost power is available for the predetermined limited period of time, regardless of whether the additional power is actually used or not.

While existing speed boosting techniques provide drivers with some flexibility and add an element of excitement to electric kart racing, there is a desire for an even greater degree of freedom in configuring the boost mode. It would be desirable to provide drivers and teams with a boost function that could be further customized within given limits of power and time, thereby enhancing the strategic aspect of electric kart racing and increasing audience enjoyment of the sport.

GB2513612A shows an example of an electric vehicle with a boost system.

There is therefore a desire for systems and methods for electric kart speed boosting, which addresses at least some of the above-mentioned drawbacks.

SUMMARY

It is an object of the present to ameliorate at least some of the inconveniences present in the prior art.

In accordance with one aspect of the present technology, there is provided an electric vehicle, including a frame; a seat connected to the frame; two front wheels rotationally connected to the frame; a steering wheel operatively connected to the two front wheels; two rear wheels rotationally connected to the frame; an electric motor operatively connected to at least one of the two front wheels and the two rear wheels; a control unit (CU) connected to the frame, the CU being electrically connected to the electric motor; an accelerator pedal operatively connected to the frame; a pedal position sensor operatively connected to the accelerator pedal for sensing a position of the accelerator pedal, the pedal position sensor communicating with the CU for transmitting a signal representative of the position of the accelerator pedal to the CU, the CU controlling an operating torque of the electric motor based at least in part on the signal; a battery pack connected to the frame and electrically connected to the electric motor; a boost system, including a manual boost controller, the manual boost controller communicating with the CU; a boost mode manager communicating with the CU and the battery pack, and in response to the manual boost controller being activated, the boost mode manager determining a remaining boost energy, the remaining boost energy being a difference between a predetermined maximum boost energy and a total boost energy used, the predetermined maximum boost energy corresponding to a percentage of energy of the battery pack; in response to a boost enable condition, the boost enable condition comprising the remaining boost energy being greater than zero, the boost mode manager sending a command to the CU to add a boost torque to the operating torque.

In some embodiments, the electric vehicle is an electric kart.

In some embodiments, the electric vehicle further includes a vehicle control unit (VCU), the VCU comprising the CU and the boost mode manager.

In some embodiments, in response to the manual boost controller being activated, the remaining boost energy is continuously discharged.

In some embodiments, the boost system further includes a human-machine interface (HMI) communicating with the CU and the battery pack, the HMI being configured to provide a remaining battery estimate.

In some embodiments, the remaining battery estimate includes a notification of at least one of the remaining boost energy, the predetermined maximum boost energy, and the total boost energy used.

In some embodiments, the predetermined maximum boost energy corresponds to at least 10% of the energy of the battery pack.

In some embodiments, the boost torque is at least 10% of a maximum value of the operating torque.

In some embodiments, in response to the boost enable condition, the boost mode manager sends a command to the CU to add a boost torque to the operating torque for a maximum boost time.

In some embodiments, the boost enable condition further includes a cooldown between boosts having elapsed.

In some embodiments, the cooldown between boosts is a scalar multiple of the maximum boost time.

In some embodiments, the boost system further includes boost controls for setting at least one of a value of the predetermined maximum boost energy, a value of the maximum boost time, and a value of the cooldown between boosts.

In some embodiments, the boost controls include a non-transitory computer readable storage medium for storing thereon the value of the predetermined maximum boost energy, the value of the maximum boost time, and the value of the cooldown between boosts, the non-transitory computer readable storage medium being accessible by the CU.

In some embodiments, adding the boost torque to the operating torque includes switching from a first torque profile to a second torque profile, the second torque profile having a higher torque than the first torque profile for a corresponding position of the accelerator pedal.

In accordance with another aspect of the present technology, there is provided a boost system for an electric vehicle, the electric vehicle including an electric motor, a battery pack and a control unit (CU), the CU controlling an operating torque of the electric motor, the boost system including a manual boost controller, the manual boost controller being configured to communicate with the CU; a boost mode manager configured to communicate with the CU and the battery pack; in response to the manual boost controller being activated, the boost mode manager being configured to determine a remaining boost energy, the remaining boost energy being a difference between a predetermined maximum boost energy and a total boost energy used, the predetermined maximum boost energy corresponding to a percentage of energy of the battery pack; and in response to a boost enable condition, the boost enable condition comprising the remaining boost energy being greater than zero, the boost mode manager being configured to send a command to the CU to add a boost torque to the operating torque.

In some embodiments, the boost system further includes a human-machine interface (HMI) being configured to communicate with the CU and the battery pack, the HMI being configured to provide a remaining battery estimate.

In some embodiments, the remaining battery estimate includes a notification of at least one of the remaining boost energy, the predetermined maximum boost energy, and the total boost energy used.

In some embodiments, the predetermined maximum boost energy corresponds to at least 10% of the energy of the battery pack.

In some embodiments, the boost torque is at least 10% of a maximum value of the operating torque.

In some embodiments, in response to the boost enable condition, the boost mode manager is configured to send a command to the CU to add a boost torque to the operating torque for a maximum boost time.

In some embodiments, the boost enable condition further includes a cooldown between boosts having elapsed.

In some embodiments, the cooldown between boosts is a scalar multiple of the maximum boost time.

In some embodiments, the boost system further includes boost controls for setting at least one of a value of the predetermined maximum boost energy, a value of the maximum boost time, and a value of the cooldown between boosts.

In some embodiments, the boost controls include a non-transitory computer readable storage medium for storing thereon the value of the predetermined maximum boost energy, the value of the maximum boost time, and the value of the cooldown between boosts, the non-transitory computer readable storage medium being accessible by the CU.

In some embodiments, adding the boost torque to the operating torque includes switching from a first torque profile to a second torque profile, the second torque profile having a higher torque than the first torque profile for a corresponding position of the accelerator pedal.

In accordance with another aspect of the present technology, there is provided a method for boosting a speed of an electric vehicle, the electric vehicle comprising an electric motor, a battery pack and a control unit (CU), the CU controlling an operating torque of the electric motor, the method including activating a manual boost controller; in response to the manual boost controller being activated, determining, by a boost mode manager, a remaining boost energy, the remaining boost energy being a difference between a predetermined maximum boost energy and a total boost energy used, the predetermined maximum boost energy corresponding to a percentage of energy of the battery pack; and in response to a boost enable condition, sending, by the boost mode manager, a command to the CU to add a boost torque to the operating torque, the boost enable condition comprising the remaining boost energy being greater than zero.

In some embodiments, adding the boost torque to the operating torque includes switching from a first torque profile to a second torque profile, the second torque profile having a higher torque than the first torque profile for a corresponding position of the accelerator pedal.

For purposes of this application, terms related to spatial orientation such as forward, rearward, upwardly, downwardly, left, and right, are as they would normally be understood by an operator of the vehicle riding thereon in a normal driving position. Terms related to spatial orientation when describing or referring to components or sub-assemblies of the vehicle, separately from the vehicle, should be understood as they would be understood when these components or sub-assemblies are mounted to the vehicle, unless specified otherwise in this application.

Embodiments of the present technology each have at least one of the above-mentioned object and/or aspects, but do not necessarily have all of them. It should be understood that some aspects of the present technology that have resulted from attempting to attain the above-mentioned object may not satisfy this object and/or may satisfy other objects not specifically recited herein.

Additional and/or alternative features, aspects, and advantages of embodiments of the present technology will become apparent from the following description, the accompanying drawings, and the appended claims.

BRIEF DESCRIPTION OF THE DRAWINGS

For a better understanding of the present technology, as well as other aspects and further features thereof, reference is made to the following description which is to be used in conjunction with the accompanying drawings, where:

Figure 1 is a top plan view of an electric kart;

Figure 2 is a perspective view, taken from a rear, left side of the kart of Fig. 1, with a seat and a rear bumper removed;

Figure 3 is a rear view of part of a steering system and associated components of the electric kart of Fig. 1;

Figure 4 is a schematic diagram of a system architecture of the electric kart of Fig. 1;

Figure 5 is a diagram of a remaining battery indicator to be displayed on a display of the control system of Fig. 3;

Figure 6A is a diagram of electric motor torque levels in the electric kart of Fig. 1;

Figure 6B is a plot of electric motor torque profiles as a function of an accelerator pedal position of the electric kart of Fig. 1.

Figure 7 is a flowchart of a method for boosting the speed of the electric kart of Fig. 1; and

Figure 8 is block diagram of a computing device of the electric kart of Fig. 1.

DETAILED DESCRIPTION

The present disclosure is not limited in its application to the details of construction and the arrangement of components set forth in the following description or illustrated in the drawings. The disclosure is capable of other embodiments and of being practiced or of being carried out in various ways. Also, the phraseology and terminology used herein is for the purpose of description and should not be regarded as limiting. The use of "including", "comprising", or "having", "containing", "involving" and variations thereof herein, is meant to encompass the items listed thereafter as well as, optionally, additional items. In the following description, the same numerical references refer to similar elements.

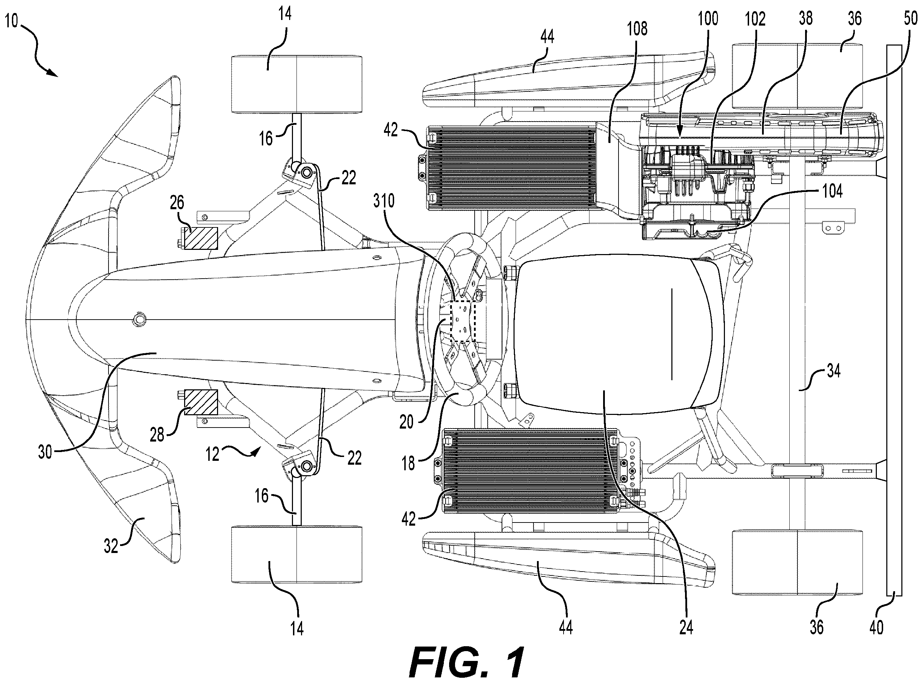

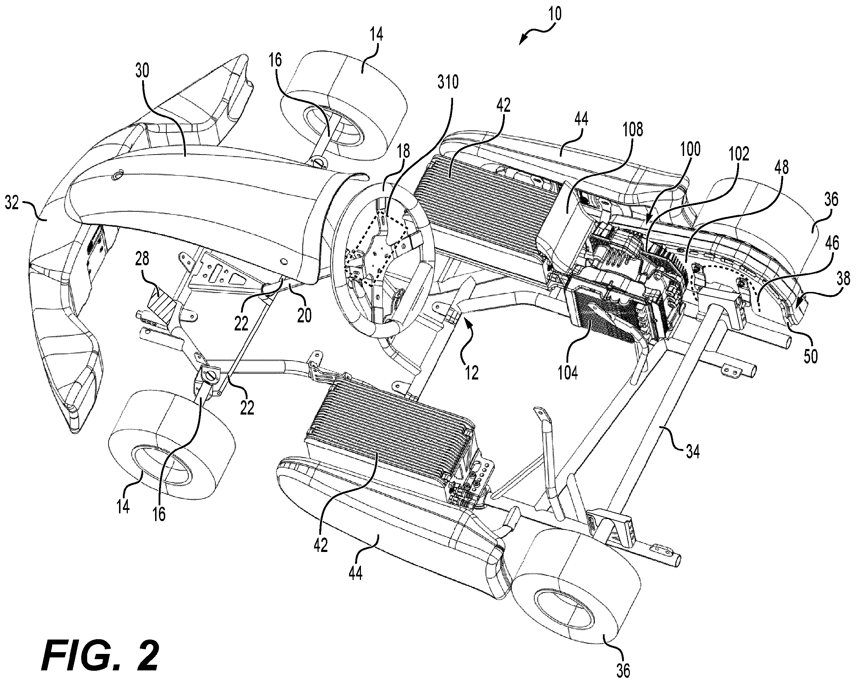

An electric kart 10 will be described with reference to Figs. 1 and 2. Although the present disclosure describes electric karts, it is contemplated that it may be applicable to electric vehicles other than karts, such as Formula E vehicles. The kart 10 has a tubular structure defining a frame 12. The frame 12 is made from a plurality of hollow cylindrical steel members and steel brackets that are welded to each other. It is contemplated that at least some of the hollow cylindrical members could be replaced by other types of members such as solid cylindrical members, hollow tubes having a cross-section other than circular, and beams, for example. It is also contemplated that the members and brackets could be made of another type of metal, such as aluminum for example. It is also contemplated that at least some of the members and brackets could be made of a non-metallic material, such as composite materials or plastics for example. It is also contemplated that at least some of the members and brackets could be joined to each other by means other than welding, such as by fastening and bonding for example. It is also contemplated that two or more of the members and brackets described above could be cast or otherwise formed as a single component. It is also contemplated that the frame 12 could have more or fewer members and brackets than illustrated in Figs. 1 and 2, depending on the type of materials used, the required strength and rigidity of the frame 12 and the weight of the components attached to the frame 12.

Two front wheels 14 are rotationally connected to the frame 12 via front-wheel axles 16. Front disk brake assemblies (not shown) are provided on the front-wheel axles 16 to brake the front wheels 14. A steering wheel 18 is connected to a steering column 20. The lower end of the steering column 20 is connected to the front-wheel axles 16 via steering links 22 to turn the front-wheel axles 16, and thereby the front wheels 14, for steering the kart 10. A seat 24 is connected to the frame 12 rearward of the steering wheel 18. An accelerator pedal 26 and a brake pedal 28 are provided forward of the seat 24. A nose cone 30 is connected to the frame 12 and is disposed over the steering column 20 in front of the steering wheel 18. The nose cone 30 is connected to a front wing 32. The front wing 32 is disposed forward of the front wheels 14 and the pedals 26, 28.

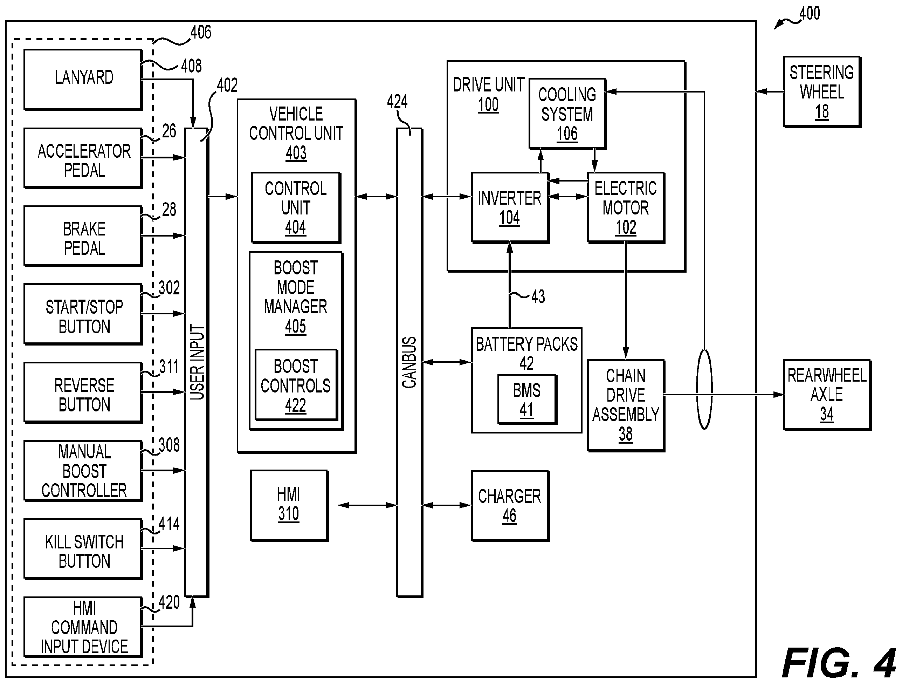

A rear-wheel axle 34 is rotationally connected to the frame 12 rearward of the seat 24. Two rear wheels 36 are connected to the ends of the rear-wheel axle 34. A rear disk brake assembly (not shown) is provided on the rear-wheel axles 34 to brake the rear wheels 36. The rear-wheel axle 34 is driven by a drive unit 100 via a chain drive assembly 38 (see Fig. 4), an exemplary implementation of which is found in the Rotax E10™ e-powertrain. It is contemplated that the rear-wheel axle 34 may also be driven by the drive unit 100 via a direct drive assembly instead of the chain drive assembly 38, an exemplary implementation of which is found in the Rotax E20™ e-powertrain. A rear bumper 40 is connected to the rear of the frame 12 and extends behind the rear wheels 36.

Two battery packs 42 supply electric power to the drive unit 100. One battery pack 42 is connected to the frame 12 on each of the left and right sides of the seat 24 such that the seat 24 is laterally between the battery packs 42. It is contemplated that the kart 10 could have only one or more than two battery packs 42. The drive unit 100 is connected to the frame 12, is disposed laterally on the right side of the seat 24, and a majority of the drive unit 100 is disposed behind the right side battery pack 42. It is contemplated that in some embodiments, the drive unit 100 could be disposed laterally on the left side of the seat 24. Left and right bumpers 44 are connected to the frame 12. The bumpers 44 are disposed laterally outward of the battery packs 42 and longitudinally between the front and rear wheels 14, 36. A charger 46 (Fig. 4) is provided to recharge the battery packs 42.

In the present embodiment, the drive unit 100 includes an electric motor 102, an inverter 104, and a cooling system 106 (see Fig. 4). The cooling system 106 includes a fan (not shown) and an air intake duct 108. It should be understood that other implementations of the drive unit 100 may be provided depending on the design of the kart 10.

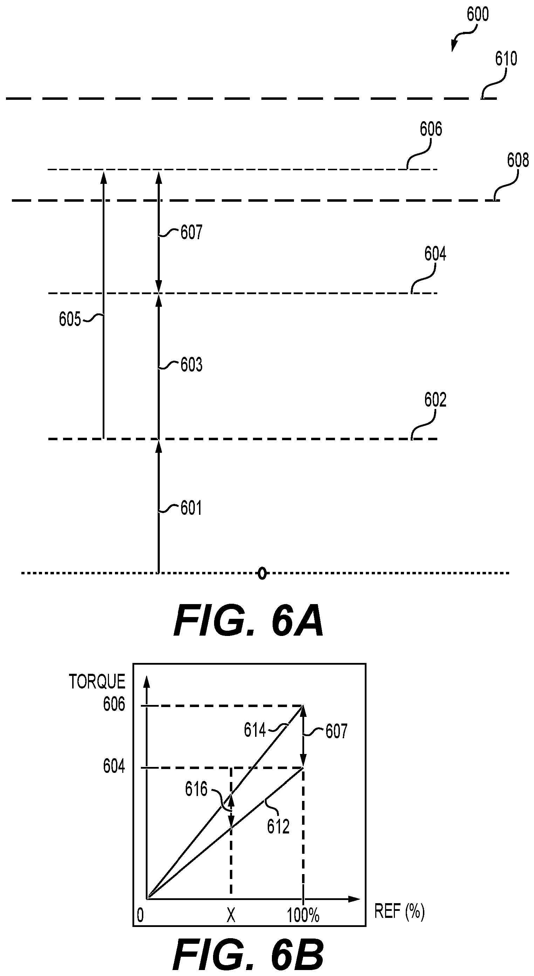

The electric motor 102 generates an operating torque and has a rotational speed defined using revolutions per minute (RPM), angular speed, or other units appropriate in the art. The electric motor 102 has a maximum continuous torque 604, defined as the maximum continuous torque that the electric motor 102 is capable of sustaining in a race. As further described hereinbelow with reference to Fig. 6A, the maximum continuous torque 604 may be set by calibration or be hard coded.

Each battery pack 42 is electrically connected to the inverter 104 by a battery management system (BMS) module 41 (not shown in Figs. 1-2) via a direct current (DC) link 43 (see Fig. 4). The DC link 43 supplies a DC link voltage and a DC link current (not shown) to the inverter 104. Each BMS module 41 is integrated in its corresponding battery pack 42. It is contemplated that the BMS modules 41 could be separate from the battery packs 42. The inverter 104 converts the DC from the battery packs 42 to alternating current (AC) and supplies the AC to the electric motor 102. In the present embodiment, the electric motor 102 is an AC motor. More specifically, the electric motor 102 is a permanent magnet synchronous motor (PMSM). It is contemplated that other types of electric motors could be used.

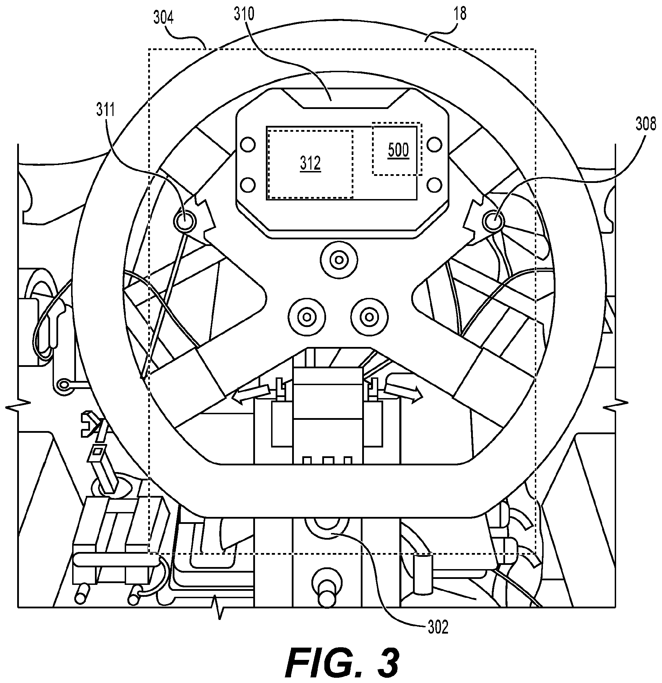

Referring to Fig. 3, with additional reference to Figs. 1 and 2, a steering system 300 and associated components of the kart 10 will be described. The steering system 300 illustratively includes at least the steering wheel 18 and the steering column 20 (not shown in Fig. 3). Driver controls 304 include at least a human-machine interface (HMI) 310, a start/stop button 302 for starting and stopping the electric motor 102 of the kart 10, and a kill switch button 414 (not shown in Fig. 3). The kill switch button 414 does not immediately stop the electric motor 102 of the kart 10, but initiates a sequence to bring the kart 10 into a safe state depending on the situation of the kart 10. In some embodiments, an emergency stop button (not shown) may be provided instead of or in addition to the kill switch button 414 for immediately stopping the electric motor 102 of the kart 10. The driver controls 304 include components not shown in Fig. 3, such as the accelerator pedal 26 and the brake pedal 28. In some embodiments, the driver controls 304 may also include a reverse button 311, among other possibilities.

The HMI 310 serves as a controller and interface for the driver of the kart 10. In the present embodiment, the HMI 310 has a screen and a plurality of buttons and is provided on the steering wheel 18. In some embodiments, it is contemplated that the HMI 310 may be provided elsewhere on the kart 10. The HMI 310 is implemented on a multi-functional touch screen that is communicatively coupled to a system bus 424 (see Fig. 4) via a hardwired connection and physically attached to the steering wheel 18. In the present embodiment, the HMI 310 is a compact-sized dash logger, the AiM MXm® Dash Logger, configured to show relevant data for monitoring the performance of the kart 10. It is contemplated that other compact-sized dash loggers could be used. The HMI 310 displays at least one of an RPM of the electric motor 102, a speed of the kart 10, a voltage of the battery packs 42, a best lap time, a maximum RPM of the electric motor 102, and a maximum speed of the kart 10. It is contemplated that other data could also be displayed on the HMI 310. In some embodiments, the HMI 310 may also be implemented as a wireless communication device (such as a tablet or smartphone, for example), that is "paired" or otherwise communicatively coupled to the system bus 324, for instance via at least one wireless gateway (not shown) provided with the HMI 310 and/or the system bus 424.

The driver controls 304 include a manual boost controller 308 configured to activate the boost mode. In the present disclosure, the boost mode being activated may be referred to as a "boosted state", "boosted condition", while the boost mode being deactivated may be referred to as an "unboosted state", "unboosted condition", or variations thereof.

In the present embodiment, the start/stop button 302, the manual boost controller 308, the kill switch button 414 and the reverse button 311 are push button controllers. In some embodiments, the start/stop button 302, the manual boost controller 308, the reverse button and the kill switch button 414 may be a type of controller other than a push button controller, as will be apparent to the person skilled in the art.

Although particular embodiments of the kart 10 have been shown and described, it will be obvious to those skilled in the art that changes and modifications may be made without departing from this invention in its broader aspects. The scope of the following claims should not be limited by the embodiments set forth in the examples, but should be given the broadest reasonable interpretation consistent with the description as a whole.

Referring to Fig. 4, a non-limiting embodiment of an electric vehicle system architecture 400 will be described for the kart 10 shown in Figs. 1 and 2. The electric vehicle system architecture 400 may also describe alternative embodiments of the kart 10, or electric vehicles other than electric karts, such as Formula E vehicles. The electric vehicle system architecture 400 includes software, hardware, or a combination of software and hardware components as described in further detail hereinbelow.

Not all of the depicted components of the electric vehicle system architecture 400 may be required. One or more implementations may include additional components not shown in Fig. 4. Variations in the arrangement and type of the components may be made without departing from the spirit or scope of the claims as set forth herein. Additional components, different components, or fewer components may be provided.

The electric vehicle system architecture 400 includes user inputs 402. The user inputs 402 are generated by position sensors (not shown) connected to input devices 406. The user inputs 402 are issued by a driver (not shown) of the kart 10, operating controllers and/or pedals in the steering system 300 or other devices provided with the kart 10 (i.e. turning the steering wheel 18, and depressing/releasing the accelerator pedal 26, the brake pedal 28, etc.). Other possibilities may apply.

Some of the user inputs 402 are represented as boolean values, i.e. logical 0 or 1 states, while others are represented as float values (also referred to as "floating-point numbers"), i.e. real numbers having a decimal place. At least some of the user inputs 402 may be implemented as discrete programming elements, such as inputs to a programmable logic controller (PLC). The user inputs 402 may be implemented in hardware using contacts and coils, as known to those skilled in the art. For instance, in some embodiments, the kill switch button 414 may be implemented as a normally closed (NC) contact (i.e. having a default or "normal" value of 1). In the event the driver of kart 10 activates the kill switch button 414, or in response to a power failure to the coil corresponding to the kill switch button 414, the contact corresponding to the kill switch button 414 would open, triggering the corresponding input in the user inputs 402, thus providing a fail-safe capability.

In the present disclosure, actuation of any one of the user inputs 402, leading to a change of logical state (i.e. from 0 to 1 or vice-versa) of any one of the user inputs 402, may be alternatively referred to as "triggering", "engaging", "toggling", "activating", or variations thereof, as understood by those skilled in the art.

The user inputs 402 include signals received from position sensors provided with the user input devices 406. The user input devices 406 include a lanyard 408, the accelerator pedal 26, the brake pedal 28, the start/stop button 302, a reverse button 311, the manual boost controller 308, the kill switch button 414, and a human-machine interface (HMI) command input device 420. The lanyard 408 is attached to the driver of kart 10 such that, if the driver gets out of the kart 10 without first stopping it, the lanyard will be pulled out, triggering the corresponding user input 402 to immediately stop the kart 10. The HMI command input device 420 is operatively connected to the HMI 310.

The system architecture 400 includes a vehicle control unit (VCU) 403 provided with the kart 10. The VCU 403 includes a control unit (CU) 404 and a boost mode manager 405 and is communicatively coupled thereto. The CU 404 is communicatively coupled with the user inputs 402 and with the system bus 424. The CU 404 receives the user input 402 representative of a position of the accelerator pedal 26 via a pedal position sensor (not shown) operatively connected to the accelerator pedal 26 for sensing a position of the accelerator pedal 26, e.g. between 0%, corresponding to a fully disengaged position of the accelerator pedal 26, and 100%, corresponding to a fully depressed position of the accelerator pedal 26, which defines a requested torque issued to the CU 404. The CU 404 controls the operating torque of the electric motor 102 based at least in part on the received user input 402. The CU 404 is operatively connected to the drive unit 100, including the electric motor 102, the inverter 104, and the cooling system 106, via the system bus 424, and issues control commands thereto. The system bus 424 is implemented using the Controller Area Network (CAN) bus standard, although it is contemplated that other standards may also be used.

The CU 404 is used to set at least one of a value of a maximum continuous torque 604, a value of a maximum boosted torque 606 and/or a boost torque 607, a value of a thermal stress limit 608, and a value of a physical limit 610 of the kart 10, as described in further detail hereinbelow with regards to Fig. 6A. In some embodiments, one or more remote users, located in a remote control center and communicating with the kart 10 therefrom, may remotely set the value of the maximum continuous torque 604, the value of the maximum boosted torque 606 and/or the boost torque 607, the value of the thermal stress limit 608, and the value of a physical limit 610 of the kart 10, via the CU 404.

The boost mode manager 405 is responsible for managing the boost mode of the kart 10. The boost mode of the kart 10 is activated using the manual boost controller 308. As described in further detail hereinbelow, activation of the boost mode is contingent on a boost enable condition 714 determined by the boost mode manager 405. From boost controls 422 provided with the boost mode manager 405, at least one of a value of a predetermined maximum boost energy 504, a value of a maximum boost time (not shown), and a value of a cooldown between boosts (not shown) are set, as described in further detail hereinbelow. In some embodiments, one or more remote users, located in a remote control center and communicating with the kart 10 therefrom, may remotely set the value of the predetermined maximum boost energy 504, the value of a maximum boost time, and the value of the cooldown between boosts via the boost controls 422. It is contemplated that the boost mode manager 405 may be provided separately from the VCU 403, for instance with the HMI 310. It is also contemplated that the boost controls 422 may be provided separately from the boost mode manager 405, for instance with the HMI 310. Other possibilities may apply.

The boost mode manager 405 is provided as part of the VCU 403. In the present embodiment, the boost mode manager 405 is provided as a software module executed by the VCU 403. More specifically, the boost mode manager 405 is provided on a non-transitory computer-readable storage medium accessible by the VCU 403 comprising instructions executable by one or more processors of the VCU 403. In some embodiments, the boost mode manager 405 may be provided as a discrete hardware module of the VCU 403. In some embodiments, the boost mode manager 405 may be provided separately from the VCU 403 and communicatively coupled thereto.

Not all of the depicted components of the electric vehicle system architecture 400 may be required. One or more implementations may include additional components not shown in Fig. 4. Variations in the arrangement and type of the components may be made without departing from the spirit or scope of the claims as set forth herein. Additional components, different components, or fewer components may be provided.

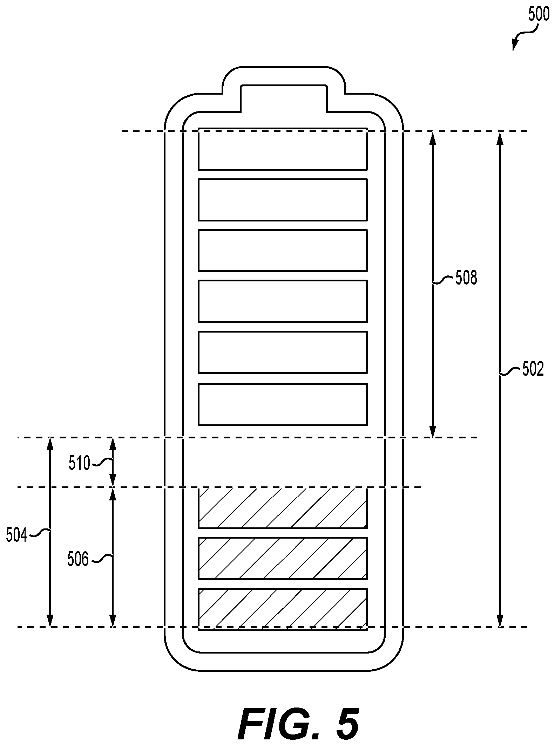

Referring to Fig. 5, an exemplary embodiment of a remaining battery indicator 500 will now be described. The remaining battery indicator 500 includes an indication of the total battery energy 502 representing a total energy stored in the battery packs 42. The total battery energy 502 corresponds, for instance, to a battery capacity of the battery packs 42, expressed in units of Ampere-hours [Ah], Watt-hours [Wh], Joules [J], or other units appropriate in the art. The remaining battery indicator 500 also includes an indication of the predetermined maximum boost energy 504. The predetermined maximum boost energy 504 corresponds to a portion of the battery capacity of the battery packs 42 reserved for the boost mode. The remaining battery indicator 500 further includes an indication of the remaining boost energy 506. The remaining boost energy 506 corresponds to a remaining portion of the battery capacity of the battery packs 42 reserved for the boost mode. The remaining battery indicator 500 further includes an indication of the total boost energy used 510. The total boost energy used 510 corresponds to a portion of the battery capacity of the battery packs 42 reserved for the boost mode that has been discharged or depleted. The remaining battery indicator 500 further includes an indication of a non-boost energy 508. The non-boost energy 508 corresponds to a portion of the battery capacity of the battery packs 42 not reserved for the boost mode.

The predetermined maximum boost energy 504 is set to be less than the total battery energy 502. The remaining boost energy 506 is less than or equal to the predetermined maximum boost energy 504. The total battery energy 502, the predetermined maximum boost energy 504, and the remaining boost energy 506 are greater than or equal to zero. The sum of the predetermined maximum boost energy 504 and the non-boost energy 508 are equal to the total battery energy 502. The sum of the remaining boost energy 506 and the total boost energy used 510 are equal to the predetermined maximum boost energy 504. The remaining boost energy 506 is determined by the boost mode manager 405.

In some embodiments, the predetermined maximum boost energy 504 may be set as a predetermined percentage of the total battery energy 502 (e.g. 10% or 20%). The remaining battery indicator 500 is provided on the HMI 310 in the form of a user interface element (see Fig. 3). The remaining battery indicator 500 includes a percentage or quantitative indication of the total battery energy 502, the predetermined maximum boost energy 504, the remaining boost energy 506, the non-boost energy 508, and/or the total boost energy used 510. The remaining battery indicator 500 blinks, flashes, or otherwise changes its display properties to indicate a condition requiring attention. The remaining battery indicator 500 includes audiovisual notifications that the remaining boost energy 506 has reached a certain threshold, for instance 20% or 10% (other thresholds may also be considered). The remaining boost energy 506 is provided in a first color (e.g. green) to indicate that the remaining boost energy 506 is above a first threshold (e.g. 20%), a second color (e.g. yellow) to indicate that the remaining boost energy 506 is below the first threshold but above a second threshold (e.g. 10%), and a third color (e.g. red) to indicate that the remaining boost energy 506 is below the second threshold. The first threshold, the second threshold, the first color, the second color, and the third color are adjustable from the boost mode manager 405. The non-boost energy 508 is differentiated from the remaining boost energy 506 on the remaining battery indicator 500 using color, graphical style, etc. Other possibilities may apply, as will be recognized by the person skilled in the art having the benefit of the present disclosure.

It should be understood that, although the remaining battery indicator 500 may be provided as a simplified symbolic diagram as shown in Fig. 5, this should not be interpreted as necessarily implying that the battery packs 42 are to be physically segmented or compartmentalized in any way. In the battery packs 42, the predetermined maximum boost energy 504 may be stored in one or more cells of the battery packs 42 in a way that is indistinguishable from the non-boost energy 508. The predetermined maximum boost energy 504 may rather be a logical condition e.g. set by the boost controls 422 of the boost mode manager 405. The remaining battery indicator 500 may be provided for the convenience of the driver of the kart 10 without being indicative of the underlying design or architecture of the battery packs 42. The description of the remaining battery indicator 500 hereinabove should not be construed as being limiting on the design of the battery packs 42.

With reference to Fig. 6A, a diagram 600 representing different torque levels of the electric motor 102 will now be described. After starting the electric motor 102 using the start/stop button 302, the driver of the kart 10 accelerates from zero torque (arrow 601). Under normal (i.e. unboosted) conditions, the electric motor 102 generates the operating torque 602, which varies depending on the position of the accelerator pedal 26. In an unboosted state, the operating torque 602 is less than or equal to the maximum continuous torque 604 of the electric motor 102, and the driver of the kart 10 may increase the operating torque 602 up to the maximum continuous torque 604 of the electric motor 102, e.g. by pressing the accelerator pedal 26, as indicated by arrow 603. The maximum continuous torque 604 may be selected to be less than a thermal stress limit 608 of the kart 10. The thermal stress limit 608 corresponds to a continuous torque at which the components of the kart 10 do not overheat.

In a boosted condition, the driver of the kart 10 may increase the operating torque 602 up to the maximum boosted torque 606 of the electric motor 102, e.g. by pressing the accelerator pedal 26 (arrow 605). The maximum boosted torque 606 is greater than or equal to the maximum continuous torque 604. In the present embodiment, the maximum boosted torque 606 is selected to be greater than the thermal stress limit 608, which is acceptable as long as the maximum boosted torque 606 is not maintained indefinitely, allowing enough time in-between boosts for the components of the electric kart 10 to cool down. It is contemplated that the maximum boosted torque 606 could be selected to be less than the thermal stress limit 608. The cooldown between boosts is set from the boost controls 422 such that the electric kart 10 has sufficient time to cool down in-between successive boosts. A boost torque 607 is defined such that the sum of the maximum continuous torque 604 and the boost torque 607 equals the maximum boosted torque 606. In the present embodiment, the maximum boosted torque 606 is further selected to be less than a physical limit 610 of the kart 10. The physical limit 610 corresponds to a mechanical limit of the electric motor 102, such as the maximum instantaneous torque capable of being generated by the electric motor 102, and to an electrical limit of the inverter 104 and of the battery packs 42, for instance a maximum current output of the battery packs 42 at low battery.

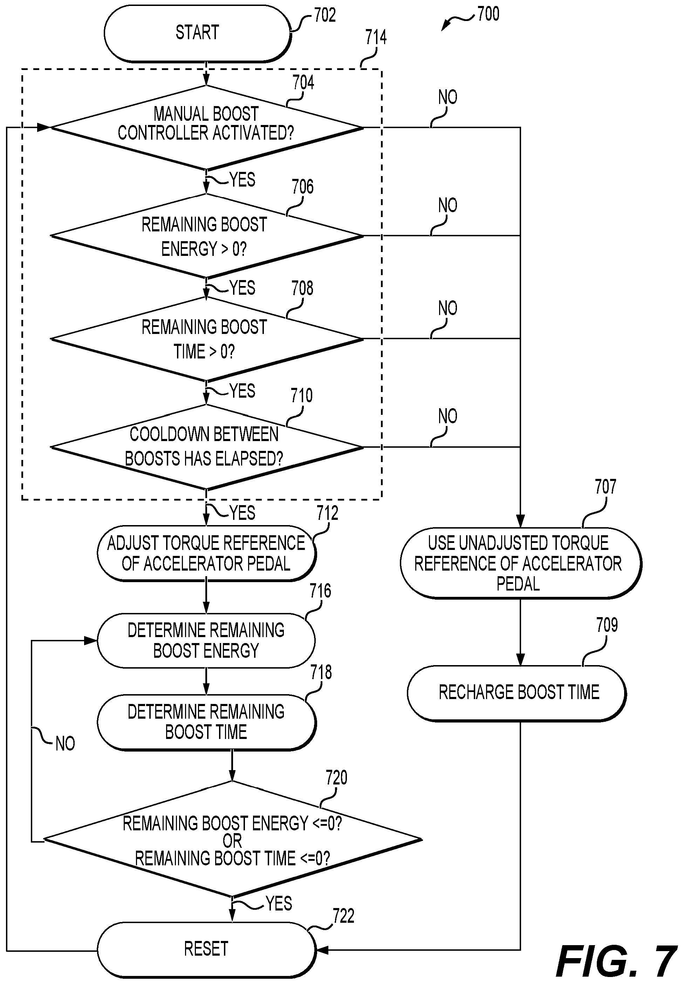

With reference to Fig. 6B, a plot of electrical torque profiles output by the electric motor 102 as a function of the position of the accelerator pedal 26 will now be described. In the present embodiment, the electrical torque output by the electric motor 102 is a linear function of the position of the accelerator pedal 26. However, it is contemplated that the electrical torque output may be at least partially non-linear. For instance, the electric torque output may be asymptotic for small values of the accelerator pedal position (e.g. 0-20%), and divergent for large values of the accelerator pedal position (e.g. over 80%). The following description is intended to be exemplary, and the assumption of linearity is adopted for convenience only. In an unboosted state, the electric motor 102 outputs an electric torque according to the function 612, where, at 100% position of the accelerator pedal 26, the electric motor 102 outputs the maximum continuous torque 604. In the boosted state, the electric motor 102 outputs an electric torque according to the function 614, where, at 100% position of the accelerator pedal 26, the electric motor 102 outputs the maximum boosted torque 606, which can be seen as a sum of the maximum continuous torque 604 and the boost torque 607. In response to the boost mode being activated, a torque reference of the accelerator pedal 26 is adjusted such that the electric motor 102 outputs the torque profile described by the function 614 rather than 612, as described in further detail below with reference to Fig. 7. The torque reference of the accelerator pedal 26 being adjusted such that the electric motor 102 outputs the torque described by the function 614 rather than 612 may also be referred to as "switching" from the torque profile described by the function 612 to 614. It should be apparent that, at a position of the accelerator pedal 26 between 0 and 100%, the electric motor 102 outputs the operating torque 602, which is limited by the maximum continuous torque 604 in an unboosted state, and by the maximum boost torque 606 in a boosted state. At a position x of the accelerator pedal 26 between 0 and 100%, boosting adds an intermediate boost torque 616 to the operating torque 602, the intermediate boost torque 616 varying as a function of the position of the accelerator pedal 26, and where the intermediate boost torque 616 is equal to the boost torque 607 when the position of the accelerator pedal 26 is at 100%.

With reference to Fig. 7, a method 700 for boosting the speed of an electric vehicle, for instance the electric kart 10, will now be described. In response to the start/stop button 302 being pressed and the accelerator pedal 26 being pressed for a pre-determined period of time, the method 700 starts (step 702).

At step 704, the method 700 includes assessing whether the manual boost controller 308 has been activated. If this is the case, the method 700 proceeds to step 706. Otherwise, the method 700 proceeds to step 707. It is contemplated that a hold delay may be introduced for the manual boost controller 308, where the driver is required to hold the manual boost controller 308 for a predetermined amount of time (e.g. 0.1 seconds) in order for the manual boost controller 308 to be considered to have been activated. If the manual boost controller 308 is not held for at least the predetermined amount of time, then the input corresponding to the manual boost controller 308 is ignored, the conditional of step 704 returns "false", and the method 700 proceeds to step 707. The hold delay may be set from the boost mode manager 405.

At step 706, the method 700 includes assessing whether the remaining boost energy 506 is greater than zero. If this is the case, the method 700 proceeds to step 708. Otherwise, the method 700 proceeds to step 707.

At step 708, the method 700 includes assessing whether the remaining boost time is greater than zero. If this is the case, the method 700 proceeds to step 710. Otherwise, the method 700 proceeds to step 707.

At step 710, the method 700 includes assessing whether the cooldown between boosts has elapsed. If this is the case, the method 700 proceeds to step 712. Otherwise, the method 700 proceeds to step 707. The steps 706, 708, and 710 may be performed by the boost mode manager 405.

The conditionals of steps 704, 706, 708, and 710 are grouped together in a boost enable condition 714, where each conditional is treated as a term in a logical AND operator. If the conditionals of steps 704, 706, 708, and 710 are true, then the boost enable condition 714 is true. If any of the conditionals of steps 704, 706, 708, and 710 are false, then the boost enable condition 714 is false. In other words, in the present embodiment, if the manual boost controller 308 is activated, the remaining boost energy 506 is greater than zero, the remaining boost time is greater than zero, and the cooldown between boosts has elapsed, then the boost enable condition 714 is true. In some embodiments, the boost enable condition 714 may include fewer or more conditionals than those of steps 704, 706, 708, and 710. In some embodiments, the boost enable condition 714 may include further conditionals related to racing regulations (e.g. no boosts allowed in the first lap, or in designated portions or zones of the racing track), or technical requirements (e.g. no boosts allowed when the drive unit 100 is above a predetermined temperature threshold, or when the total battery energy 502 of the battery packs 42 is low). Other possibilities may apply. The boost mode manager 405 determines the boost enable condition 714.

In response to the boost enable condition 714 being true, the boost mode manager 405 sends a command to the CU 403 to adjust the torque reference of the accelerator pedal 26, and the remaining boost energy 506 is continuously discharged, as described in further detail below.

At step 712, the boost mode is activated and the method 700 includes adjusting, via the CU 403, the torque reference of the accelerator pedal 26, such that, in a boosted state, the accelerator pedal 26 being fully depressed (i.e. in the 100% position) corresponds to the maximum boosted torque 606, i.e. to the sum of the maximum continuous boosted torque 606 and the boost torque 607 (see Fig. 6B). In the boosted state, the remaining boost time is continuously decreased (e.g. using equation (3) below). The remaining boost time is decreased even if the maximum continuous torque 604 is not exceeded while boosted. Alternatively, in some embodiments, the remaining boost time could be decreased by the amount of time spent above the maximum continuous torque 604. The method 700 may then proceed to the next step 716.

At step 716, the method 700 includes determining the remaining boost energy 506. Step 716 is performed by the boost mode manager 405 using equation (1) or (2) described below.

In the present embodiment, the boost mode manager 405 calculates the remaining boost energy 506 using the operating torque 602 and the rotational speed of the electric motor 102, using the following equation:

$$bstEngy[i + 1] \qquad\qquad\qquad (1)$$
$$= bstEngy[i] - max\{(tqReq - tqMaxRace), 0\} * wMot$$
$$* ts$$

where:

- $bstEngy[i + 1]$ is the remaining boost energy 506 for the calculation cycle i + 1 in [Watt-hours (Wh)];
- $bstEngy[i]$ is the remaining boost energy 506 for the calculation cycle i in [Wh];
- $eqReq$ is the operating torque 602 of the electric motor 102 calculated through the position of the accelerator pedal 26 in [Newton-meters (Nm)];
- $eqMaxRace$ is the maximum continuous torque 604 of the electric motor 102 in [Nm];
- $wMot$ is an rotational speed of the electric motor 102 in [radians per second (rad/s)]; and
- $ts$ is a sampling time between calculation cycles in [miliseconds (ms)].

In some embodiments, the boost mode manager 405 may calculate the remaining boost energy 506 using the DC link voltage and the DC link current of the battery packs 42 corrected by an efficiency factor of the drive unit 100, using the following equation:

$$bstEngy[i + 1] = bstEngy[i] - vDcBatt * iDcBatt * etaSys * ts \qquad (2)$$

where:

- *bstEngy*[*i* + 1] is the remaining boost energy 506 for the calculation cycle i + 1 in [Wh];
- *bstEngy*[*i*] is the remaining boost energy 506 for the calculation cycle i in [Wh];
- *vDcBatt* is the DC-link voltage of the battery packs 42 in [Volts (V)];
- *iDcBatt* is the DC-link current of the battery packs 42 in [Amperes (A)];
- *etaSys* is an efficiency factor of the drive unit 100; and
- *ts* is the sampling time between calculation cycles in [ms].

At step 718, the method 700 includes determining the remaining boost time. The boost mode manager 405 calculates the remaining boost time of the boost mode, using the following equation:

$$bstTime[i + 1] = bstTime[i] - ts \qquad (3)$$

where:

- *bstTime*[*i* + 1] is a remaining boost time for the calculation cycle i + 1 in [seconds (s)];

- *bstTime*[*i*] is a remaining boost time for the calculation cycle i in [s]; and

- *ts* is the sampling time between calculation cycles in [ms].

Equation (3) is used to calculate the remaining boost time of a single boost. In response to the boost enable condition 714 being true (i.e. the conditional 708 is also true, meaning that the remaining boost time is greater than zero), the remaining boost time of the boost mode is continuously decreased.

At step 720, the method 700 includes assessing whether the remaining boost energy 506 is less than or equal to zero, or whether the remaining boost time is less than or equal to zero. If any of the above are true, the method resets (step 722), whereupon the torque reference of the accelerator pedal 26 is reset, the remaining boost time recharges according to equation (4) below, and the method 700 returns to step 704. Otherwise, the method 700 proceeds back to step 716, where the remaining boost energy 506 is determined. When either of the remaining boost energy 506 or the remaining boost time fall below zero at step 720, the method 700 resets (step 722).

At step 707, in response to any of the conditionals of steps 704, 706, 708, or 710 being false, the CU 403 uses an unadjusted value of the torque reference of the accelerator pedal 26, e.g. corresponding to the function 614 of Fig. 6B, where the accelerator pedal 26 being fully depressed (i.e. in the 100% position) corresponds to the maximum continuous torque 604, and the method 700 proceeds to step 709.

At step 709, the boost mode manager 405 calculates a recharge time of the remaining boost time of the boost mode, using the following equation:

$$bstTime[i + 1] = bstTime[i] + cBstTimeRchg * ts \qquad (4)$$

where:

- *bstTime*[*i* + 1] is the remaining boost time for the calculation cycle i + 1 in [s];

- *bstTime*[*i*] is the remaining boost time for the calculation cycle i in [s];

- *cBstTimeRchg* is a time constant for boost time recharging; and

- *ts* is the sampling time between calculation cycles in [ms].

The remaining boost time recharges according to equation (4) up to and until the maximum boost time of a single boost is reached, after which the recharging stops, and the method 700 resets (step 722).

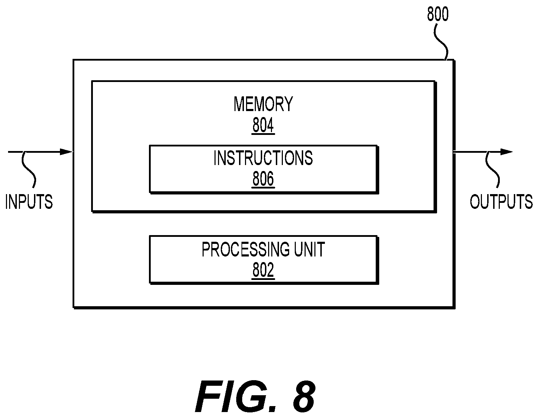

With reference to Fig. 8, part or all of the embodiments of the devices, systems and methods described herein are implemented in a combination of both hardware and software.

Fig. 8 illustrates an example computing device 800 which is used to implement the method 700 of Fig. 7 and/or the VCU 403. The computing device 800 includes a processing unit 802 and a memory 804 which has stored therein computer-executable instructions 806. The processing unit 802 includes any suitable devices configured to implement the functionality of the method 700 of Fig. 7 and/or the VCU 403 such that instructions 806, when executed by the computing device 800 or other programmable apparatus, causes the functions/acts/steps performed by the method 700 of Fig. 7 and/or the VCU 403 described herein to be executed. The processing unit 802 may include, for example, any type of general-purpose microprocessor or microcontroller, a digital signal processing (DSP) processor, a central processing unit (CPU), an integrated circuit, a field programmable gate array (FPGA), a reconfigurable processor, other suitably programmed or programmable logic circuits, custom-designed analog and/or digital circuits, or any combination thereof.

The memory 804 includes any suitable known or other machine-readable storage medium. The memory 804 may include non-transitory computer readable storage medium, for example, but not limited to, an electronic, magnetic, optical, electromagnetic, infrared, or semiconductor system, apparatus, or device, or any suitable combination of the foregoing. The memory 804 may include a suitable combination of any type of computer memory that is located either internally or externally to device, for example random-access memory (RAM), read-only memory (ROM), electro-optical memory, magneto-optical memory, erasable programmable read-only memory (EPROM), and electrically-erasable programmable read-only memory (EEPROM), Ferroelectric RAM (FRAM) or the like. Memory 804 may include any storage means (e.g., devices) suitable for retrievably storing machine-readable instructions 806 executable by processing unit 802.

The above description is meant to be exemplary only. The computing device 800 may be any suitable computing device, such as a portable computing device, a mobile phone, a tablet, or the like.

Modifications and improvements to the above-described embodiments of the present technology may become apparent to those skilled in the art. The foregoing description is intended to be exemplary rather than limiting. The scope of the present technology is therefore intended to be limited solely by the scope of the appended claims.

**Claims**

1. A boost system for an electric vehicle (10), the electric vehicle comprising an electric motor (102), a battery pack (42) and a control unit, CU, the CU (404) controlling an operating torque of the electric motor, the boost system comprising:

   a manual boost controller (308), the manual boost controller being configured to communicate with the CU; and
   a boost mode manager (405) configured to communicate with the CU (404) and the battery pack (42);
   **characterized by** that in response to the manual boost controller (308) being activated:

   the boost mode manager (405) being configured to determine a remaining boost energy, the remaining boost energy (506) being a difference between a predetermined maximum boost energy (504) and a total boost energy used (510); the predetermined maximum boost energy (504) corresponding to a percentage of energy of the battery pack (502); and
   in response to a boost enable condition, the boost enable condition comprising the remaining boost energy being greater than zero, the boost mode manager being configured to send a command to the CU to add a boost torque to the operating torque.

2. The boost system of claim 1, wherein the boost system further comprises a human-machine interface (HMI) being configured to communicate with the CU and the battery pack, the HMI being configured to provide a remaining battery estimate.

3. The boost system of claim 2, wherein the remaining battery estimate comprises a notification of at least one of the remaining boost energy, the predetermined maximum boost energy, and the total boost energy used.

4. The boost system of any one of claims 1 to 3, wherein the predetermined maximum boost energy corresponds to at least 10% of the energy of the battery pack.

5. The boost system of any one of claims 1 to 4, wherein the boost torque is at least 10% of a maximum value of the operating torque.

6. The boost system of any one of claims 1 to 5, wherein, in response to the boost enable condition, the boost mode manager is configured to send a command to the CU to add a boost torque to the operating torque for a maximum boost time.

7. The boost system of claim 6, wherein the boost enable condition further comprises a cooldown between boosts having elapsed.

8. The boost system of claim 7, wherein the cooldown between boosts is a scalar multiple of the maximum boost time.

9. The boost system of claim 7 or 8, wherein the boost system further comprises boost controls for setting at least one of a value of the predetermined maximum boost energy, a value of the maximum boost time, and a value of the cooldown between boosts.

10. The boost system of claim 9, wherein the boost controls comprise:
a non-transitory computer readable storage medium for storing thereon the value of the predetermined maximum boost energy, the value of the maximum boost time, and the value of the cooldown between boosts, the non-transitory computer readable storage medium being accessible by the CU.

11. The boost system of any one of claims 1 to 10, wherein adding the boost torque to the operating torque comprises switching from a first torque profile to a second torque profile, the second torque profile having a higher torque than the first torque profile for a corresponding position of the accelerator pedal.

12. An electric vehicle, comprising:

a frame;
a seat connected to the frame;
two front wheels rotationally connected to the frame;
a steering wheel operatively connected to the two front wheels;
two rear wheels rotationally connected to the frame;
an electric motor operatively connected to at least one of:

the two front wheels; and
the two rear wheels;

a control unit (CU) connected to the frame, the CU being electrically connected to the electric motor;
an accelerator pedal operatively connected to the frame;
a pedal position sensor operatively connected to the accelerator pedal for sensing a position of the accelerator pedal, the pedal position sensor communicating with the CU for transmitting a signal representative of the position of the accelerator pedal to the CU, the CU controlling an operating torque of the electric motor based at least in part on the signal;
a battery pack connected to the frame and electrically connected to the electric motor; and
a boost system according to any one of claims 1 to 11.

13. The electric vehicle of claim 12, wherein, in response to the manual boost controller being activated, the remaining boost energy is continuously discharged.

14. A method for boosting a speed of an electric vehicle, the electric vehicle comprising an electric motor, a battery pack and a control unit (CU), the CU controlling an operating torque of the electric motor, the method comprising:

activating a manual boost controller;
in response to the manual boost controller being activated:
determining, by a boost mode manager, a remaining boost energy, the remaining boost energy being a difference between a predetermined maximum boost energy and a total boost energy used, the predetermined maximum boost energy corresponding to a percentage of energy of the battery pack; and

in response to a boost enable condition, sending, by the boost mode manager, a command to the CU to add a boost torque to the operating torque, the boost enable condition comprising the remaining boost energy being greater than zero.

15. The method of claim 14, wherein adding the boost torque to the operating torque comprises switching from a first torque profile to a second torque profile, the second torque profile having a higher torque than the first torque profile for a corresponding position of the accelerator pedal.

**Patentansprüche**

1. Boostsystem für ein Elektrofahrzeug, wobei das Elektrofahrzeug (10) einen Elektromotor (102), einen Batteriepack (42) und eine Steuereinheit, CU, umfasst, wobei die CU (404) ein Betriebsdrehmoment des Elektromotors steuert, wobei das Boostsystem umfasst:

   eine manuelle Booststeuerung (308), wobei die manuelle Booststeuerung zum Kommunizieren mit der CU konfiguriert ist; und
   einen Boostmodusmanager (405), der zum Kommunizieren mit der CU (404) und dem Batteriepack (42) konfiguriert ist;
   **dadurch gekennzeichnet, dass** als Reaktion auf das Aktivieren der manuellen Booststeuerung (308):

   der Boostmodusmanager (405) zum Bestimmen einer verbleibenden Boostenergie konfiguriert ist, wobei die verbleibende Boostenergie (506) eine Differenz zwischen einer vorbestimmten maximalen Boostenergie (504) und einer insgesamt verbrauchten Boostenergie (510) ist, wobei die vorbestimmte maximale Boostenergie (504) einem Prozentsatz von Energie des Batterie packs (502) entspricht; und
   dass als Reaktion auf einen Zustand mit aktiviertem Boost, wobei der Zustand mit aktiviertem Boost umfasst, dass die verbleibende Boostenergie größer als null ist, der Boostmodusmanager zum Senden eines Befehls an die CU zum Hinzufügen eines Boostdrehmoments zu dem Betriebsdrehmoment konfiguriert ist.

2. Boostsystem nach Anspruch 1, wobei das Boostsystem ferner eine Mensch-Maschine-Schnittstelle (MMS) umfasst, die zum Kommunizieren mit der CU und dem Batteriepack konfiguriert ist, wobei die MMS zum Bereitstellen einer Schätzung der verbleibenden Batteriekapazität konfiguriert ist.

3. Boostsystem nach Anspruch 2, wobei die Schätzung der verbleibenden Batteriekapazität eine Benachrichtigung über mindestens eines von der verbleibenden Boostenergie, der vorbestimmten maximalen Boostenergie und der insgesamt verbrauchten Boostenergie umfasst.

4. Boostsystem nach einem der Ansprüche 1 bis 3, wobei die vorbestimmte maximale Boostenergie mindestens 10 % der Energie des Batteriepacks entspricht.

5. Boostsystem nach einem der Ansprüche 1 bis 4, wobei das Boostdrehmoment mindestens 10 % eines Maximalwerts des Betriebsdrehmoments beträgt.

6. Boostsystem nach einem der Ansprüche 1 bis 5, wobei der Boostmodusmanager als Reaktion auf den Zustand mit aktiviertem Boost zum Senden eines Befehls an die CU zum Hinzufügen eines Boostdrehmoments zu dem Betriebsdrehmoment für eine maximale Boostzeit konfiguriert ist.

7. Boostsystem nach Anspruch 6, wobei der Zustand mit aktiviertem Boost ferner ein Ablaufen von Abkühlzeit zwischen Boosts umfasst.

8. Boostsystem nach Anspruch 7, wobei die Abkühlzeit zwischen Boosts ein skalares Vielfaches der maximalen Boostzeit ist.

9. Boostsystem nach Anspruch 7 oder 8, wobei das Boostsystem ferner Booststeuerelemente zum Einstellen mindestens eines von einem Wert der vorbestimmten maximalen Boostenergie, einem Wert der maximalen Boostzeit und einem Wert der Abkühlzeit zwischen Boosts umfasst.

10. Boostsystem nach Anspruch 9, wobei die Booststeuerelemente umfassen:
    ein nichtflüchtiges computerlesbares Speichermedium zum Speichern des Werts der vorbestimmten maximalen Boostenergie, des Werts der maximalen Boostzeit und des Werts der Abkühlzeit zwischen Boosts darauf, wobei die CU auf das nichtflüchtige, computerlesbare Speichermedium zugreifen kann.

11. Boostsystem nach einem der Ansprüche 1 bis 10, wobei das Hinzufügen des Boostdrehmoments zu dem Betriebsdrehmoment ein Umschalten von einem ersten Drehmomentprofil zu einem zweiten Drehmomentprofil umfasst, wobei das zweite Drehmomentprofil bei einer entsprechenden Stellung des Fahrpedals ein höheres Drehmoment aufweist als das erste Drehmomentprofil.

**12.** Elektrofahrzeug, umfassend:

ein Chassis;
einen mit dem Chassis verbundenen Sitz;
zwei drehend mit dem Chassis verbundene Vorderräder;
ein mit den beiden Vorderrädern wirkverbundenes Lenkrad;
zwei drehend mit dem Chassis verbundene Hinterräder;
einen Elektromotor, der mit mindestens einem wirkverbunden ist von:

den beiden Vorderrädern; und
den beiden Hinterrädern;

eine mit dem Chassis verbundene Steuereinheit (CU), wobei die CU elektrisch mit dem Elektromotor verbunden ist;
ein mit dem Chassis wirkverbundenes Fahrpedal;
einen mit dem Fahrpedal wirkverbundenen Pedalpositionssensor zum Erfassen einer Position des Fahrpedals, wobei der Pedalpositionssensor zum Übertragen eines die Position des Fahrpedals darstellenden Signals zu der CU mit der CU kommuniziert, wobei die CU ein Betriebsdrehmoment des Elektromotors mindestens teilweise basierend auf dem Signal steuert;
einen mit dem Chassis verbundenen und elektrisch mit dem Elektromotor verbundenen Batteriepack; und
ein Boostsystem nach einem der Ansprüche 1 bis 11.

**13.** Elektrofahrzeug nach Anspruch 12, wobei als Reaktion auf ein Aktivieren der manuellen Booststeuerung die verbleibende Boostenergie kontinuierlich abgegeben wird.

**14.** Verfahren zum Verstärken einer Geschwindigkeit eines Elektrofahrzeugs, wobei das Elektrofahrzeug einen Elektromotor, einen Batteriepack und eine Steuereinheit (CU) umfasst, wobei die CU ein Betriebsdrehmoment des Elektromotors steuert, wobei das Verfahren umfasst:

Aktivieren einer manuellen Booststeuerung;
als Reaktion auf das Aktivieren der manuellen Booststeuerung:
Bestimmen einer verbleibenden Boostenergie durch einen Boostmodusmanager, wobei die verbleibende Boostenergie eine Differenz zwischen einer vorbestimmten maximalen Boostenergie und einer insgesamt verbrauchten Boostenergie ist, wobei die vorbestimmte maximale Boostenergie einem Prozentsatz von Energie des Batteriepacks entspricht; und

als Reaktion auf einen Zustand mit aktiviertem Boost Senden eines Befehls durch den Boostmodusmanager an die CU zum Hinzufügen eines Boostdrehmoments zu dem Betriebsdrehmoment, wobei der Zustand mit aktiviertem Boost umfasst, dass die verbleibende Boostenergie größer als null ist.

**15.** Verfahren nach Anspruch 14, wobei das Hinzufügen des Boostdrehmoments zu dem Betriebsdrehmoment ein Umschalten von einem ersten Drehmomentprofil zu einem zweiten Drehmomentprofil umfasst, wobei das zweite Drehmomentprofil bei einer entsprechenden Stellung des Fahrpedals ein höheres Drehmoment aufweist als das erste Drehmomentprofil.

**Revendications**

**1.** Système de suralimentation d'un véhicule électrique, le véhicule électrique (10) comprenant un moteur électrique (102), un bloc-batterie (42) et une unité de commande, CU, la CU (404) commandant un couple de fonctionnement du moteur électrique, le système de suralimentation comprenant :

un contrôleur de suralimentation manuel (308), le contrôleur de suralimentation manuel étant configuré pour communiquer avec la CU ; et
un gestionnaire de mode de suralimentation (405) configuré pour communiquer avec la CU (404) et le bloc-batterie (42) ;
**caractérisé en ce que**, en réponse à l'activation du contrôleur de suralimentation manuel (308) :

le gestionnaire de mode de suralimentation (405) est configuré pour déterminer l'énergie de suralimentation résiduelle, l'énergie de suralimentation résiduelle (506) étant la différence entre une énergie de suralimentation maximale prédéfinie (504) et une énergie de suralimentation totale utilisée (510), l'énergie de suralimentation maximale prédéfinie (504) correspondant à un pourcentage d'énergie du bloc-batterie (502) ; et en réponse à une condition d'activation de la suralimentation, la condition d'activation de la suralimentation comprenant l'énergie de suralimentation résiduelle étant supérieure à zéro, le gestionnaire de mode de suralimentation étant configuré pour envoyer une instruction à la CU pour ajouter un couple de suralimentation au couple de fonctionnement.

2. Système de suralimentation selon la revendication 1, le système de suralimentation comprenant en outre une interface homme-machine (HMI) configurée pour communiquer avec la CU et le bloc-batterie, la HMI étant configurée pour fournir une estimation de la capacité résiduelle de la batterie.

3. Système de suralimentation selon la revendication 2, dans lequel l'estimation de la capacité résiduelle de la batterie comprend une notification d'au moins un paramètre parmi l'énergie de suralimentation résiduelle, l'énergie de suralimentation maximale prédéfinie et l'énergie de suralimentation totale utilisée.

4. Système de suralimentation selon l'une quelconque des revendications 1 à 3, dans lequel l'énergie de suralimentation maximale prédéfinie correspond à au moins 10 % de l'énergie du bloc-batterie.

5. Système de suralimentation selon l'une quelconque des revendications 1 à 4, dans lequel le couple de suralimentation est d'au moins 10 % d'une valeur maximale du couple de fonctionnement.

6. Système de suralimentation selon l'une quelconque des revendications 1 à 5, dans lequel, en réponse à la condition d'activation de suralimentation, le gestionnaire de mode de suralimentation est configuré pour envoyer une instruction à la CU pour ajouter un couple de suralimentation au couple de fonctionnement pendant une durée de suralimentation maximale.

7. Système de suralimentation selon la revendication 6, dans lequel la condition d'activation de suralimentation comprend en outre un temps de recharge entre les suralimentations écoulées.

8. Système de suralimentation selon la revendication 7, dans lequel le temps de recharge entre les suralimentations est un multiple scalaire du temps de suralimentation maximal.

9. Système de suralimentation selon la revendication 7 ou 8, dans lequel le système de suralimentation comprend en outre des commandes de suralimentation pour régler au moins une valeur parmi une valeur de l'énergie de suralimentation maximale prédéfinie, une valeur du temps de suralimentation maximal et une valeur du temps de recharge entre les suralimentations.

10. Système de suralimentation selon la revendication 9, dans lequel les commandes de suralimentation comprennent : un support de stockage non transitoire lisible par ordinateur pour stocker la valeur de l'énergie de suralimentation maximale prédéfinie, la valeur du temps de suralimentation maximal et la valeur du temps de recharge entre les suralimentations, le support de stockage non transitoire lisible par ordinateur étant accessible par la CU.

11. Système de suralimentation selon l'une quelconque des revendications 1 à 10, dans lequel l'ajout du couple de suralimentation au couple de fonctionnement comprend le passage d'un premier profil de couple à un second profil de couple, le second profil de couple présentant un couple plus élevé que le premier profil de couple pour une position correspondante de la pédale d'accélérateur.

12. Véhicule électrique comprenant :

un châssis ;
un siège relié au châssis ;
deux roues avant reliées en rotation au châssis ;
un volant relié de manière fonctionnelle aux deux roues avant ;
deux roues arrière reliées en rotation au châssis ;
un moteur électrique relié de manière fonctionnelle à au moins :

l'une des deux roues avant ; et
les deux roues arrière ;

une unité de commande (CU) reliée au châssis, la CU étant reliée électriquement au moteur électrique ;
une pédale d'accélérateur reliée de manière fonctionnelle au châssis ;
un capteur de position de pédale relié de manière fonctionnelle à la pédale d'accélérateur pour détecter une position de la pédale d'accélérateur, le capteur de position de pédale communiquant avec la CU pour transmettre un signal représentatif de la position de la pédale d'accélérateur à la CU, la CU commandant un couple de fonctionnement du moteur électrique sur la base, au moins en partie, du signal ;
un bloc-batterie relié au châssis et relié électriquement au moteur électrique ; et
un système de suralimentation selon l'une quelconque des revendications 1 à 11.

**13.** Véhicule électrique selon la revendication 12, dans lequel, en réponse à l'activation du contrôleur de suralimentation manuel, l'énergie de suralimentation résiduelle est déchargée en continu.

**14.** Procédé de suralimentation de la vitesse d'un véhicule électrique, le véhicule électrique comprenant un moteur électrique, un bloc-batterie et une unité de commande (CU), la CU commandant un couple de fonctionnement du moteur électrique, le procédé comprenant :

l'activation d'un contrôleur de suralimentation manuel ;
en réponse à l'activation du contrôleur de suralimentation manuel :
la détermination, par un gestionnaire de mode de suralimentation, d'une énergie de suralimentation résiduelle, l'énergie de suralimentation résiduelle étant une différence entre une énergie de suralimentation maximale prédéfinie et une énergie de suralimentation totale utilisée, l'énergie de suralimentation maximale prédéfinie correspondant à un pourcentage d'énergie du bloc-batterie ; et

en réponse à une condition d'activation de suralimentation, l'envoi, par le gestionnaire de mode de suralimentation, d'une instruction à la CU pour ajouter un couple de suralimentation au couple de fonctionnement, la condition d'activation de suralimentation comprenant l'énergie de suralimentation résiduelle étant supérieure à zéro.

**15.** Procédé selon la revendication 14, dans lequel l'ajout du couple de suralimentation au couple de fonctionnement comprend le passage d'un premier profil de couple à un second profil de couple, le second profil de couple présentant un couple plus élevé que le premier profil de couple pour une position correspondante de la pédale d'accélérateur.

*FIG. 1*

*FIG. 2*

**FIG. 3**

EP 4 393 755 B1

**FIG. 4**

EP 4 393 755 B1

**FIG. 5**

**FIG. 6A**

**FIG. 6B**

FIG. 7

800

MEMORY
804

INSTRUCTIONS
806

INPUTS

OUTPUTS

PROCESSING UNIT
802

# FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63434302

- GB 2513612 A